# NEW EUROPEAN PATENT SPECIFICATION

(11) **EP 0 741 655 B2**
(45) Date of publication and mention of the opposition decision: **19.05.2010**
(45) Mention of the grant of the patent: 04.02.2004
(21) Application number: 95943583.5
(22) Date of filing: 13.11.1995
(51) Int. Cl.: B64G 1/24, B64C 37/02, B64D 5/00, B64G 4/00, B64G 1/00, B64G 1/64

(54) **APPARATUS AND METHODS FOR IN-SPACE SATELLITE OPERATIONS**
VERFAHREN UND VORRICHTUNG FÜR DAS ARBEITEN VON SATELLITEN IM WELTRAUM
APPAREIL ET PROCEDES D'EXPLOITATION DE SATELLITES DANS L'ESPACE

(30) Priority: 14.11.1994 WO PCT/US94/13052
(43) Date of publication of application: 13.11.1996
(73) Proprietor: The Baron Company, Ltd, Hamilton HM EX (BM)
(72) Inventor: The Baron Company, Ltd, Hamilton HM EX (BM)
(74) Representative: Brereton, Paul Arthur
(86) International application number: PCT/US1995/015103
(87) International publication number: WO 1996/015030

(56) References cited:
- EP-A- 0 541 052
- WO-A-94/05546
- US-A- 3 564 134
- US-A- 3 910 533
- US-A- 4 890 918
- US-A- 4 964 596
- US-A- 5 015 187
- US-A- 5 109 345
- US-A- 5 340 060
- TRANSACTIONS OF THE A.S.M.E. JOURNAL OF ENGINEERING FOR INDUSTRY, vol. 107, no. 1, February 1985, NEW YORK, USA, pages 49-54, XP002015396 FRENCH ET AL.: "SATELLITE SERICING BY TELEOPERATORS"
- AVIATION WEEK AND SPACE TECHNOLOGY, vol. 134, no. 26, 1 July 1991, NEW YORK, USA, page 26 XP002015397 DORNHEIM: "ALPHA CHEMICAL LASER TESTS AFFIRM DESIGN OF SPACE-BASED WEAPON"
- PROCEEDINGS OF THE 1986 IEEE INTERNATIONAL CONFERENCE ON ROBOTICS AND AUTOMATION, vol. 2, 7 - 10 April 1986, SAN FRANCISCO,USA, pages 804-806, XP002015398 JENKINS: "TELEROBOTIC WORK SYSTEM-SPACE ROBOTICS APPLICATIONS"
- PROCEEDINGS OF THE 1987 IEEE INTERNATIONAL CONFERENCE ON ROBOTIC AND AUTOMATION, vol. 1, 31 March 1987 - 3 April 1987, NORTH CAROLINA, USA, pages 138-150, XP002015399 KRISHEN ET AL.: "ROBOTIC VISION/SENSING FOR SPACE APPLICATIONS"
- '"Soyuz 7K-OK" Chronology for 14.04.1968 and 15.04.1968 (http://www.astronautix.com/craft/soyz7kok. htm)', ENCYCLOPEDIA ASTRONAUT
- '"Romance to Reality - Moon and Mars mission plans" (www.marsinstitute.info/rd/faculty/dportree /rtr/re01.html)', MARS INSTITUTE
- '"Gemini 8" (http://www.nasastatistik.de/gemini/mission /gemini8.html)', NASA STATISTICS
- '"Gemini 10" (http://nasastatistik.de/gemini/mission/gem ini10.html)', NASA STATISTICS
- '"Orbitale Betriebseinrichtungen"', HALLMANN/LEY, MÜNCHEN, WIEN, 1988 article 'Handbuch der Raumfahrttechnik, Chapter 19.3.5'

## Description

This invention pertains to methods for in-space satellite operations, for extending the useful life of a space satellite.

More particularly, the invention relates to such methods for extending the useful operational lifetime of satellites which perform communications, weather reconnaissance, space reconnaissance and similar functions.

In another respect, the invention pertains to such methods for extending the useful life of such satellites without performing complicated in-space refueling or repair functions.

Because of the high reliability of contemporary electronics, the end-of-life (EOL) of most satellites is caused by on board propellant depletion and the corresponding loss of attitude and position control, i.e., for orientation, pointing, including stabilization, and orbit control. The previous proposed approach to extending EOL is to replenish the propellant in the satellite tanks by refueling from another spacecraft. Alternatively, mechanical attachment of additional external propellant tanks to the target satellite would also accomplish this objective.

In addition to EOL by normal propellant depletion, there have been numerous instances in which satellites have been initially delivered to unacceptable orbits. These orbits could have been corrected by additional propulsion maneuvers. However, use of the satellites' onboard propellant to move it to an acceptable orbit resulted in a corresponding reduction in the useful life of the satellite. In some instances, initial orbit correction was impossible because it would have completely depleted the satellite's onboard propellant supply.

In the past, considerable effort has been expended to develop in-space refueling technology. However, this has required extensive and expensive modifications to conventional satellites, risky proximity operations, possible contamination of the satellite by escaping fuel and other practical problems.

The principal object of the present invention is to provide methods for in-space satellite operations, such as, for example, extending the useful life of a space satellite, modifying its space trajectory, etc.

Yet another object of the invention is to provide such extension of the useful life of a space satellite by a simplified method and using simplified apparatus in comparison to prior art techniques which involve refuelling the space satellite.

The transactions of the A.S.M.E. Journal of Engineering for Industry, vol 107, no.1, February 1985, New York, USA at pages 49 to 54 describes a method of satelite sericing by Teleoperators.

The invention is defined in the claims. There follows a detailed description of the invention with reference to the drawings, in which:
Fig. 1 is a perspective view of an extension spacecraft for performing in-space proximity operations in accordance with a presently preferred embodiment of the invention;
Fig. 2 is a partially cut-away perspective view of the service module of the extension spacecraft of Fig. 1;
Fig. 3 is a perspective view of the command module of the extension spacecraft of Fig. 1;

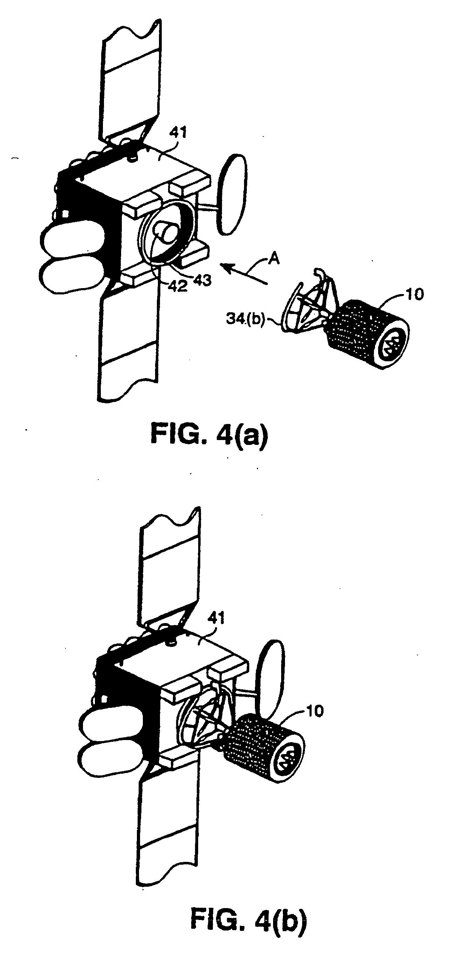

Fig. 4 illustrates the docking maneuvers and mechanical interconnection of the extension spacecraft of Fig. 1-3 with a target satellite;
Fig. 5-7 illustrate a typical mission scenario performed by the method of the invention, to transfer a satellite from an unusable orbit to its intended operational orbit and thereafter provide stationkeeping and pointing for the docked combination extension spacecraft-target satellite.

As used herein the term "controlling the position of the docked satellite-spacecraft combination" includes both controlling the trajectory of the docked combination relative to the earth and/or controlling the attitude of the docked combination relative to the earth or to the star field.

Briefly, in accordance with one embodiment of the invention, I provide methods for performing satellite proximity operations such as inspection, recovery and life extension of a target satellite through operation of a "Satellite Inspection Recovery and Extension" ("SIRE") spacecraft which can be operated in the following modes (teleoperated, automatic, and autonomous). The SIRE concept further consists of those methods and techniques used to perform certain (on-orbit) operations including, but not limited to, the inspection, servicing, recovery, and lifetime extension of satellites, spacecraft, space systems, space platforms, and other vehicles and objects in space, collectively defined as "target satellites."

The three basic types of SIRE proximity missions are defined as "Lifetime Extension," "Recovery," and "Utility." Each type of mission is further separated into additional categories depending on more specific technical and operational requirements. For example, the objective of the Lifetime Extension Mission is to provide additional stationkeeping propellant for satellites that are approaching their projected end of life (EOL) due to onboard propellant depletion but which are otherwise fully functional. The Lifetime Extension Mission thus enables the fully functional satellite to remain operational in its desired (revenue producing) orbit for an extended period beyond its projected end of life by forming a docked SIRE satellite-spacecraft combination.

To perform the Life Extension Mission, the SIRE spacecraft includes guidance, navigation and control systems, an onboard propellant supply and docking means for mechanically connecting the target satellite and the SIRE spacecraft to form the docked satellite-spacecraft combination. Preferably, the propulsion system is hypergolic consisting of mono-methylhydrazine and N₂O₄ for proximity operations. The guidance, navigation and control systems of the SIRE spacecraft provide the means for controlling the position of the docked satellite-spacecraft combination. The onboard propellant supply is sufficient to provide for rendezvous and docking of the SIRE spacecraft with the target satellite and for position control of the docked satellite-spacecraft combination.

In accordance with another embodiment of the invention, I provide a method for adjusting the life of a target satellite. The method of the invention comprises the steps of mechanically connecting a SIRE spacecraft to the target satellite, forming a docked satellite-spacecraft combination and activating the guidance, navigation and control systems of the SIRE spacecraft to provide position control for the docked satellite-spacecraft combination. The SIRE spacecraft used in this method includes onboard propellant supply for position control of the docked satellite-spacecraft, after docking. By having the SIRE spacecraft perform all stationkeeping functions such as position and attitude control, the satellite may perform its designed functions, such as telecommunications and weather mapping, long after its original projected end of life.

The objective of the "Recovery Mission" is to correct various anomalies encountered by orbiting satellites. These anomalies include incorrect launch orbit, orbital decay, loss of satellite function capability, and satellite system failure. To correct incorrect launch orbit or orbital decay, the SIRE spacecraft is similar in construction to the spacecraft utilized for Lifetime Extension Missions. The "recovery" SIRE spacecraft includes guidance, navigation and control systems, an onboard propellant supply and docking means for mechanically connecting the target satellite and the SIRE spacecraft to form the docked satellite-spacecraft combination. The guidance, navigation and control systems of the SIRE spacecraft provide the means for controlling the position of the docked satellite-spacecraft combination. The onboard propellant supply is sufficient to provide for rendezvous and docking of the spacecraft with the satellite and for subsequently transferring the satellite to another orbit.

Where the target satellite has suffered a loss of capability such as a non-deployed antenna or solar array, the SIRE spacecraft includes additional apparatus for effecting repair or refurbishment, or for effecting return of the spacecraft to Earth (Shuttle). In a preferred embodiment, the SIRE spacecraft includes docking means for effecting the docked spacecraft-satellite combination and intervention tools for effecting repair and/or refurbishment of the target satellite. The intervention tools, by way of example, include means for removing and replacing sections of the satellite such as spacecraft thermal blankets, means for severing restraint cables that prevent deployment of the antenna or solar array and means for deploying stuck mechanisms. More particularly, by way of example these intervention tools may include, a satellite capture bar such as the "Stinger" designed by NASA, one or more robotic arms similar to a smaller version of the Remote Manipulator System (RMS) found on the Space Shuttle, a satellite closeup inspection tool such a remotely operated camera, a two-finger gripper, a cable/pin/bolt cutter and a lever force tool.

Alternatively, for certain system (subsystem, component) failures, the Recovery Mission provides the target satellite with a substitute or supplemental system to "recover" the satellite to its designed operational capability including redundancy. For example, Anik E-1 and Anik E-2, which are three-axis stabilized spacecraft designed to provide television coverage for Western Europe, have both suffered failures of their primary momentum wheels. Similarly, several additional spacecraft have also encountered anomalies with their momentum wheels indicating possible premature failures. The docking of a SIRE spacecraft equipped with supplemental momentum wheels to the target satellite would provide the necessary stabilization to enable the satellite to remain operational for its projected end of life.

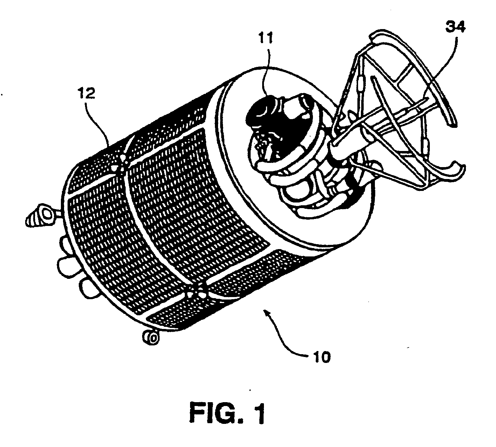

Turning now to the drawings, Figs. 1-3 illustrate an extension spacecraft constructed for use in accordance with the method of the present invention. The spacecraft 10 comprises a command module 11 and a service module 12. The SIRE satellite embodies exoatmospheric construction and is adapted to be carried into space, e.g., to a rendezvous phasing orbit or low early orbit in the enclosed cargo bay or within the enclosing shroud of an earth launch vehicle (ELV) such as, for example, the Taurus or the Space Shuttle, depending on mission requirements, availability, cost, etc. For example, in one embodiment of the invention, the baseline earth launch vehicle is the Delta 7920, which has a low earth orbit payload insertion capability of approximately 5,000 kilograms and a geosynchronous transfer orbit of approximately 1,300 kilograms.

The service module 12 operates as a "space bus" for the command module 11, providing among other functions, propulsion, power and communications support, thus minimizing the requirements for corresponding subsystems in the command module 11. The operations phase design lifetime of the command module 11 for in-space servicing can therefore be relatively short, based on specific programmed tasks at the target vehicle during a fixed period of activity. For certain missions, the command module 11 will separate from the service module 12 and operate independently. Also, for certain missions, a space transfer vehicle (STV), such as that disclosed in my issued U.S. Patent No. 5,242,135, can be employed to transfer the extension spacecraft 10 from the launch insertion orbit to a rendezvous phasing orbit (RPO).

As will be apparent to those skilled in the art, all of the functions of the command module 11 could be incorporated into the service module 12, although the separate command and service modules herein described provide for maximum mission flexibility and are, accordingly, a presently preferred embodiment of the invention.

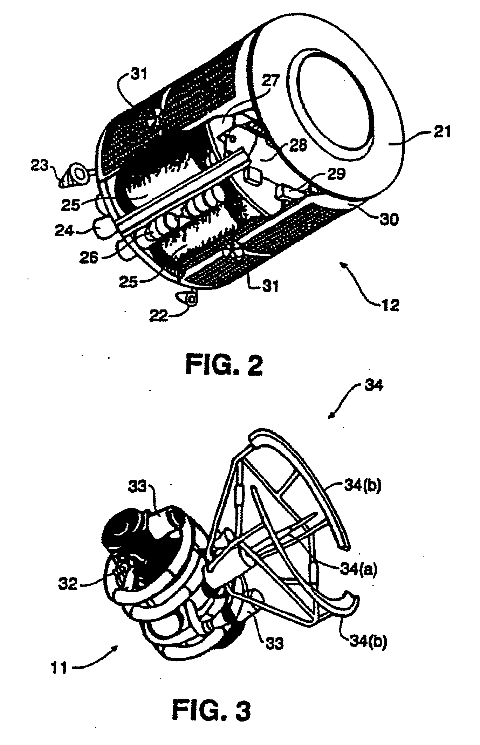

Referring more particularly to Fig. 2, the primary purpose of the service module 12 is to augment the propulsion capabilities of the command module 11. For example, if the command module 11 is configured as a variant of the SDIO Lightweight Exoatmospheric Projectile (LEAP) Vehicle, the service module 12 can be based on the design of the existing "Small Altimeter" (SALT) satellite manufactured for the United States Navy by Intraspace, Inc., North Salt Lake City, Utah. The service module 12 includes a command module adapter ring 21, GPS antenna 22, 5-Band OMNI antenna 23, orbit insertion motors 24, propellant tanks 25, batteries, 26. Mounted on the middeck 27 is a reaction control system 28 and on-board processor 29. These components are enclosed by a monocoque structure 30, on which are mounted solar power cell arrays 31.

The service module 12 is sized to perform all rendezvous and proximity maneuvers, as well as specific transfer maneuvers required for the extension spacecraft-target satellite docked combination. For certain target spacecraft locations, the energy requirements to position the extension spacecraft for rendezvous may be greater than that available from the service module 12, for example, an inclination change for the target satellite. In such cases, the STV would be added to the extension spacecraft 10 to augment the propulsion capabilities of the service module 12.

For major maneuvers, the service module 12 is equipped with a storable bipropellant system consisting of a "quad" array of four uprated Marquardt R-4-D 490 Newton (100 lb.) thrust axial engines. This configuration provides adequate thrust-to-weight ratio to minimize the effects of non-impulsive maneuvers, as well as redundancy for engine-out capability to complete the mission. Marquardt R-4-D engines are selected for their very high reliability, high Isp (322 seconds), maturity (over 800 produced) and availability.

To prevent contamination of the target satellite when the extension spacecraft is stationkeeping, the extension spacecraft attitude control system is a nitrogen cold gas system consisting of 16 x 5 lb. thrusters mounted in quads on the circumference of the service module 12. This configuration enables both three-axis rotation and three-axis translation for, example, for stationkeeping and docking.

Referring more specifically to Fig. 3, the command module 11 includes several major subsystems, including guidance, navigation and control (GNC) system used for all extension spacecraft operations, a main propulsion system with "divert" thrusters of approximately 100 lbs. (490 N) thrust each, an attitude control system, and data and communication subsystems. The command module payload consists of a "seeker" subsystem with sensors for target location, tracking and inspection, and a docking system with various servicing devices such as a docking apparatus or robotic arms with clamps or grippers.

The basic configuration of the command module 11 is defined as a completely independent vehicle to enhance mission planning flexibility, minimize interface requirements, maximize the use of existing or developmental small spacecraft, and enable independent testing and verification of certain proximity operations and hardware in ground facilities prior to launch. The command module 11 may remain attached to the service module 12 (as for the UHF-1 recovery mission, described below), or it may be detached to operate autonomously. The service module 12 could, therefore, carry two or more command modules 11. In such configuration, the service module 12 acts as the primary spacecraft and the command module or modules can be detached for use as observation spacecraft. In either case, prior to separation of the command module(s) 11, certain rendezvous braking maneuvers would be performed by the divert thrusters of the combined command module-service module.

The baseline design command module 11 consists of a variant of the SDIO LEAP with minor modifications. The Rocketdyne AHIT Vehicle is selected as the baseline command module 11. This vehicle has completed several full-up hover tests in the SDIO National Hover Test Facility. In current configuration it weighs 10.2 kilograms, including 1.7 kilograms of propellant. It produces a delta velocity increment of 357 m/sec.

In this configuration, the command module includes cold gas attitude control system thrusters 32 and two divert thrusters 33 which have significantly higher thrust (490 N, 100 lb.) than the service module engines (5 lb.). These divert thrusters 33 are aligned along the line of sight from the service module 12 toward the target satellite. These divert thrusters 33 would not be used in close proximity to the target satellite to preclude contamination of the satellite. The remaining two divert thrusters of the AHIT vehicle are removed.

This forward alignment of the divert thrusters enables the seeker assembly to be continuously oriented toward the target satellite, thus precluding the necessity of rotating the extension spacecraft 180 degrees opposite to the target line of site to perform braking maneuvers. Although the engines 24 of the service module 12 could be used to perform braking, the low thrust level of these engines (20 lbs. total) would result in much longer burn times and very narrow margins in ignition time, burn durations, orbital position, and relative. velocity.

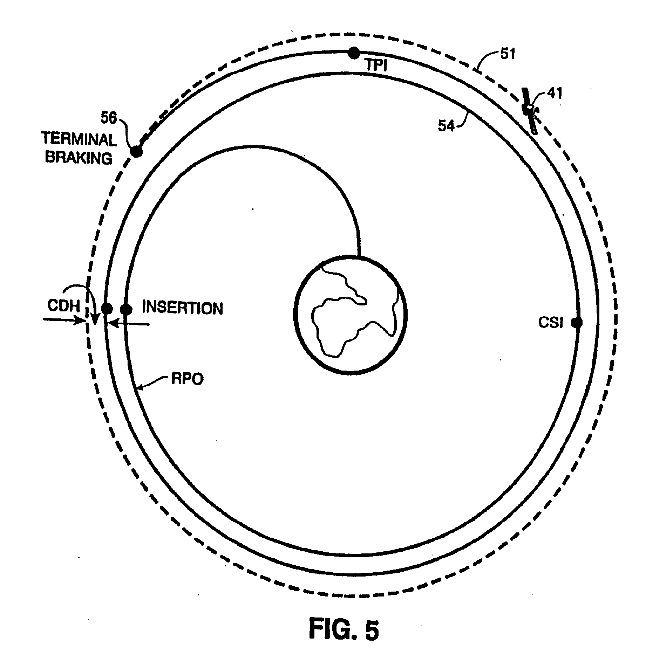

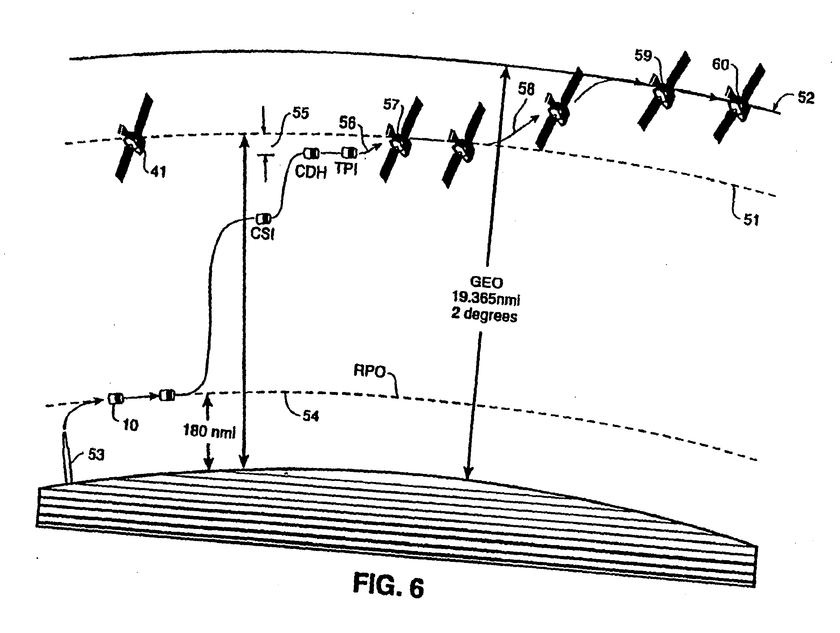

Figs. 5-7 illustrate a typical mission scenario which can be accomplished by the methods of the present invention. Illustratively, this scenario envisions the recovery of the Navy UHF-1 satellite which was launched into a non-operational orbit on March 29, 1993, by a degraded launch vehicle. Subsequently, the Navy stated that the UHF-1 satellite is a total loss. At present, the UHF-1 satellite 41 is in essentially a geosynchronous transfer orbit 51 with a perigee at 118 nm, apogee at 19,365 nm and an inclination at 27 degrees. The recovery flight profile depicted in Figs. 5-7 is designed to accomplish insertion of the satellite 41 into geostationary orbit (GEO) 52 by circularizing the orbit and reducing its inclination to approximately zero degrees.

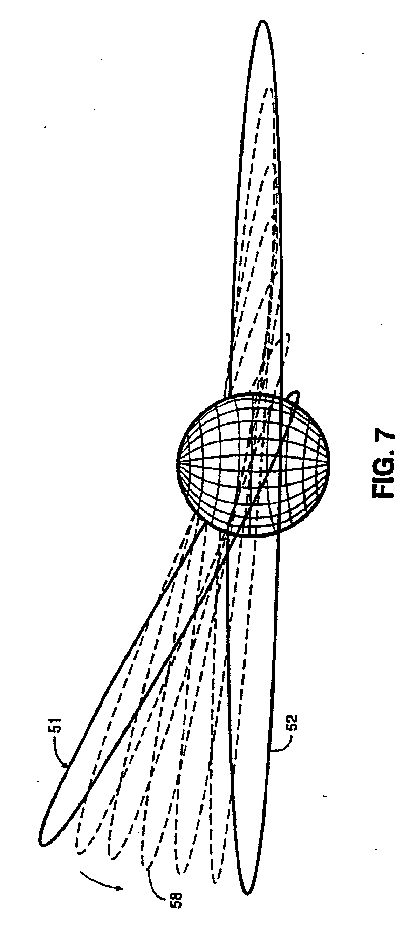

To accomplish this mission, the extension spacecraft 10 is launched from the earth by an earth launch vehicle 53, into a Rendezvous Phasing Orbit (RPO) 54 with a perigee of 180 nm, an apogee of approximately 19,345 nm and an inclination of 27 degrees. After insertion of the SIRE spacecraft 10 into RPO, a four-impulse sequence is initiated which consists of coeliptic sequence initiation (CSI), constant delta height (CDH), terminal phase initiation (TPI) and braking. CSI establishes a desired ratio of relative height to phase angle between the extension spacecraft 10 and the target satellite 41. CSI also establishes, based on subsequent maneuvers, the standard lighting conditions as well as transfer time for the final approach to the target 41. CDH establishes a constant differential altitude between the extension spacecraft 10 and the target satellite. TPI establishes a spacecraft trajectory that will intercept the target satellite 41 at a specific time and position on the orbit 52 of the target satellite 41. A nominal transfer interval of 130 degrees is used to optimize propellant usage, provide adequate control authority during the final approach, insure the apparent inertial motion of the target satellite 41 (relative to the starfield) as near zero during the latter part of the intercept, and insure that the transfer is along the line of sight. Braking is performed as a series of distinct maneuvers performed at specific range/rate "gates", each of which occurs at a range from the target where the actual range/rate is reduced to a preplanned value. The maneuvers at these gates gradually reduce the relative velocity between the vehicles to zero. After docking of the SIRE spacecraft 10 with the target satellite 41, the docked combination 57 then perform a series of maneuvers to raise the perigee of the docked combination 58 through intermediate orbits (indicated by the dash lines on Fig. 7) to raise the perigee to 19,365 nm and reduce the inclination to near zero, placing the docked combination in final operational orbit (GEO) 52.

## Claims

1. A method for performing in-space proximity operations in order to extend the life of a target satellite with depleted propellant, without performing in-space refuelling or repair functions, the method comprising:
operating a remote cockpit to remotely control an extension spacecraft in proximity to an orbiting target satellite;
mechanically connecting the extension spacecraft to the target satellite, forming a docked satellite-spacecraft combination, the extension spacecraft including:
a position control satellite subsystem; and
activating the satellite subsystem of the extension spacecraft to perform all station-keeping functions of the target satellite-spacecraft combination and provide the position control of the satellite-spacecraft combination to extend the life of the target satellite;
the extension spacecraft remaining docked to the target satellite throughout the extended life of the target satellite.

2. A method according to claim 1 in which the satellite subsystem includes:
stabilization means for providing stabilization control of the docked satellite-spacecraft;
and the method includes:
activating the stabilization means to control the stabilization of the satellite-spacecraft combination to extend the life of the target satellite.

3. A method according to claim 2 in which the stabilization means include momentum wheels.

4. A method according to any of the preceding claims, in which:
the extension spacecraft includes:
an intervention tool for refurbishing or repairing satellite; the method including:
operating the intervention tool to refurbish or repair the satellite.

## Patentansprüche

1. Verfahren zum Durchführen von Annäherungsoperationen im Weltraum um die Nutzungsdauer eines Zielsatelliten mit verbrauchtem Triebestoff zu verlängern ohne Auftank- oder Reparaturfunktionen im Weltraum auszuführen, unfassend die folgenden Schritte:
Bedienen eines Ferncockpits, um ein Verlängerungsraumfahrzeug bei seiner Annäherung an einen umlaufenden Zielsatelliten fernzusteuern;
mechanisches Verbinden des Verlängerungsraumfahrzeugs mit dem Zielsatelliten, Herstellen einer angedockten Kombination aus Satellit und Raumfahrzeug, wobei das Verlängerungsraumfahrzeug Folgendes umfasst:
ein Satellitensubsystem zur Positionsteuerung; und
Aktivieren des Satelliteneubsystems um alle Lagestabilisierungsfunktionen der Kombination aus Ziehlsatellit und Raumfahrzeug ausführen und eine Positionsteuerung vorzunehmen, um die Lebensdauer des Zielsatelliten zu verlängern;
das Verlängerungsraumfahrzeug für die verlängerte Lebensdauer des Zielsatelliten am Zielsatelliten angedockt bleibt.

2. Verfahren nach Anspruch 1, bei dem das Satellitensubsystem Folgendes umfasst:
Stabilieierungsmittel zum Bereitstellen von Stabilisierungsregelung des angedockte Satellitenraumfahrzeugs; und das Verfahren den folgenden Schritt umfasst:
Aktivieren des Stabilisierungsmittels zum Steuern der Stabilisierung der Kombination aus Satellit und Raumfahrzeug, um die Lebensdauer des Zielsatelliten zu verlängern.

3. Verfahren nach Anspruch 2, bei dem das Stabilisierungsmittel Schwungräder beinhaltet.

4. Verfahren nach einem der vorherigen Ansprüche, bei dem: das Verlängerungsraumschiff Folgendes umfasst:
ein Eingriffswerkzeug zum Überholen oder Reparieren des Satelliten; wobei das Verfahren den folgenden Schritt umfasst:
Bedienen des Eingriffswerkzeugs zum Überholen oder Reparieren des Satelliten.

## Revendications

1. Procédé d'exécution d'opérations de proximité dans l'espace afin d'étendre la durée de vie d'un satellite cible avec ergols épuisés sans exécuter de fonctions de ravitaillement ou de réparation dans l'espace, le procédé comprenant:
l' exploitation d'un habitacle distant pour télécommander un engin spatial d'extension a proximité d'un satellite cible en orbite;
la connexion mécanique de l'engin spatial d'extension au satellite site, formant une combinaison satellite-engin spatial amarrée, l'engin spatial d'extension conportant:
un sous-systéme de satellite pour commander de position; et
l'activation du sous-système de satellite afin d'effectuer toutes les fonctions de maintien de position et d'assurer une commands de position pour prolonger la durée de vie du satellite cible;
le satellite d'extension rester amarré au satellite cible durant tourte la durée de vie prolongée du satellite cible.

2. Procédé selon la revendication 1, dans lequel le sous-système de satellite comporte:
un moyen de stabilisation pour assurer une commande de stabilization du satellite-engin spatial amarrés;
et le procédé comporte:
l'activation du moyen de stabilisation pour commander la stabilisation de la combinaison satellite-engin spatial afin de prolonger la durée de vie du satellite cible.

3. Procédé conforment à la revendication 2, dans lequel le moyen de stabilisation comporte des volants d'inertie.

4. Procédé selon l'une quelconque des revendications précédentes, dans lequel:
l'engin spatial d'extension comporte:
un outil d'intervention pour remettre en état ou réparer le satellite; le procédé comportant:
l'actionnement de l'outil d'intervention afin de remettre en état ou de réparer le satellite.
